# EUROPÄISCHE PATENTSCHRIFT

(11) **EP 2 828 569 B1**
(45) Veröffentlichungstag und Bekanntmachung des Hinweises auf die Patenterteilung: **10.05.2017**
(21) Anmeldenummer: 13712139.8
(22) Anmeldetag: 18.03.2013
(51) Int. Cl.: F17C 7/00

(54) **VERFAHREN ZUM VERSORGEN EINES ANTRIEBSAGGREGATS**
METHOD FOR SUPPLYING A DRIVE UNIT
PROCÉDÉ DESTINÉ À ALIMENTER UN GROUPE D'ENTRAÎNEMENT

(30) Priorität: 21.03.2012 DE 102012005689
(43) Veröffentlichungstag der Anmeldung: 28.01.2015
(73) Patentinhaber: Audi AG, 85045 Ingolstadt (DE)
(72) Erfinder: VAN DOORN, René, 74182 Obersulm-Willsbach (DE)
(74) Vertreter: Brandt, Kai
(86) Internationale Anmeldenummer: PCT/EP2013/000813
(87) Internationale Veröffentlichungsnummer: WO 2013/139459

(56) Entgegenhaltungen:
- DE-A1-102004 037 851
- DE-A1-102006 031 875
- DE-T5-112007 002 802
- US-A1- 2006 246 177
- US-A1- 2010 193 045

## Beschreibung

Die Erfindung betrifft ein Verfahren und eine Anordnung zum Versorgen eines Antriebsaggregats eines Kraftfahrzeugs mit einem Gas.

Wasserstoff, der für eine Brennstoffzelle eines Antriebs eines Kraftfahrzeugs benötigt wird, wird in dem Kraftfahrzeug in hierfür vorgesehenen Zylindern bei einem Druck von bis zu 700 bar gespeichert. Dabei kann zur Optimierung einer ausreichenden Menge an Wasserstoff sowie unter Berücksichtigung eines minimalen Innenraumverlusts und sonstiger Package Restriktionen vorgesehen sein, dass in dem Kraftfahrzeug bis zu fünf derartige Zylinder angeordnet sind. Dabei ist jedem dieser Zylinder ein elektromagnetisch betätigbares Absperrventil zugeordnet, das zum Öffnen mit einem Strom von bis zu einem Ampere (1A) bestromt werden muss. Es ist weiterhin vorgesehen, immer alle Absperrventile zur gleichen Zeit zu bestromen, so dass bis zu 5 Ampere (60 Watt) allein zum Öffnen der Absperrventile benötigt werden.

Ein Behältersystem mit mehreren Wasserstoffbehältern für ein Brennstoffzellensystem ist aus der Druckschrift DE 10 2004 037 851 B4 bekannt. Dieses Behältersystem umfasst auch ein Drucksteuermodul, das Abgabedurchflussraten des Wasserstoffs, die in ihrer Summe eine Zuführdurchflussrate des vereinigten Stroms bilden, mit Durchflussratenreguliermodulen einzeln anhand jeweiliger primärer Drücke der jeweiligen Wasserstoffbehälter so einstellt, dass die primären Drücke der Wasserstoffbehälter im Wesentlichen ausgeglichen werden. Innerhalb des Behältersystems wird eine Auswahl der Wasserstoffbehälter mit höherem primärem Druck und eine Anweisung zum Abgeben des Wasserstoffs bei voreingestellten Zeiten wiederholt, um nacheinander aktive Behälter für die Abgabe des Wasserstoffs zu wechseln.

Ein Verfahren zum Öffnen von Tankabsperrventilen in Gaszufuhrsystemen mit verbundenen Tanks ist in der Druckschrift DE 10 2006 031 875 B4 beschrieben. Dabei sind die genannten Tanks als Druckwasserstoffgastanks eines Brennstoffzellensystems ausgebildet, wobei jedem Druckwasserstoffgastank ein Tankabsperrventil zugeordnet ist. Hierbei werden die Tankabsperrventile bei einem Start des Brennstoffzellensystems nacheinander geöffnet.

Ein Verfahren zur Steuerung einer Wasserstoffzufuhr zu einem Brennstoffzellenstapel eines Brennstoffzellensystems ist in der Druckschrift DE 10 2005 047 972 B4 beschrieben. Dabei ist der Brennstoffzellenstapel über eine Durchflusssteuereinheit mit einem Wasserstofftank verbunden. Außerdem umfasst das Brennstoffzellensystem drei Injektoren, die nacheinander gesteuert werden, um einen Durchsatz an Wasserstoff zu dem Brennstoffzellenstapel zu erhöhen oder zu verringern.

Ein aus der Druckschrift US 2006/246177 A1 bekanntes Gasversorgungsgerät umfasst einen Tank zum Speichern von Gas sowie einen Füllmechanismus zum Fördern des Gases aus dem Tank unter einem reduzierten Druck. Außerdem umfasst das Gasversorgungsgerät ein Thermometer zum Bestimmen einer Temperatur des Tanks und einen Versorgungsregulator, mit dem eine Gasversorgung in Abhängigkeit der Temperatur des Tanks reguliert wird.

Ein Gasversorgungssystem für mehrere Gastanks ist aus der Druckschrift US 2010/0193045 A1 bekannt. Hierbei ist jedem der Gastanks ein Magnetventil mit einem Prüfventil sowie ein Druckablassventil zugeordnet. Außerdem umfasst das System ein Überströmventil, ein Rücksetzdruckventil, einen Hochdrucksensor, einen Niederdrucksensor sowie einen Druckregulator.

Vor diesem Hintergrund werden ein Verfahren sowie eine Anordnung mit den Merkmalen der unabhängigen Patentansprüche vorgestellt.

Weitere Vorteile und Ausgestaltungen der Erfindung ergeben sich aus den abhängigen Patentansprüchen, der Beschreibung und der beiliegenden Zeichnung.

Die Erfindung betrifft ein Verfahren zum Versorgen eines Antriebsaggregats eines Kraftfahrzeugs mit einem Gas, das in mehreren Behältern gespeichert ist. Dabei ist jedem Behälter ein Ventil zum Öffnen und Schließen des Behälters und ein als Temperatursensor ausgebildeter Gassensor zum Ermitteln einer Temperatur als Zustandsgröße des Gases in dem jeweiligen Behälter zugeordnet. Die Behälter sind über eine gemeinsame Leitung mit dem Antriebsaggregat verbunden. Diese gemeinsame Leitung bildet ausgehend von einer Schnittstelle eine gemeinsame Verbindung sämtlicher Behälter zu dem Antriebsaggregat. Somit kann Gas aus allen Behältern über die gemeinsame Leitung zu dem Antriebsaggregat strömen. Entlang der gemeinsamen Leitung ist mindestens ein für alle Behälter gemeinsamer Gassensor zum Ermitteln zumindest einer Zustandsgröße des Gases angeordnet. Zum Versorgen des Antriebsaggregats wird jeweils nur eines der Ventile geöffnet. Wenn dieses eine Ventil geöffnet ist, sind oder werden alle anderen Ventile geschlossen. Das geöffnete Ventil wird wieder geschlossen, wenn zumindest eine ermittelte Zustandsgröße von einem Sollwert um einen Toleranzwert abweicht.

Dies kann bedeuten, dass das geöffnete Ventil geschlossen wird, wenn die zumindest eine von dem mindestens einen gemeinsamen Gassensor ermittelte Zustandsgröße von einem Sollwert um einen Toleranzwert abweicht und/oder wenn die zumindest eine von dem als Temperatursensor ausgebildeten und dem geöffneten Behälter zugeordneten Gassensor ermittelte Temperatur als Zustandsgröße des Gases in dem geöffneten Behälter von einem Sollwert um einen Toleranzwert abweicht.

Üblicherweise wird das aktuell geöffnete Ventil, das einem als Versorgungseinheit aktiven Behälter zugeordnet ist, geschlossen, und das Ventil, das einem anderen Behälter zugeordnet ist, geöffnet, wenn entweder die zumindest eine von dem gemeinsamen Gassensor ermittelte Zustandsgröße in der für alle Behälter gemeinsamen Leitung oder die Temperatur des aktuell aktiven Behälters um einen Toleranzwert von dem vorgesehenen Sollwert abweicht.

Hierbei kann eine Temperatur des mindestens einen geöffneten Behälters gemessen und über den Joule-Thomson-Effekt ein Durchsatz an Wasserstoffgas für den mindestens einen Behälter bestimmt werden.

Außerdem betrifft die Erfindung eine Anordnung zum Versorgen eines Antriebsaggregats eines Kraftfahrzeugs mit einem Gas, das in mehreren Behältern gespeichert ist, wobei jedem Behälter ein Ventil zum Öffnen und Schließen des Behälters und ein als Temperatursensor ausgebildeter Gassensor zum Ermitteln einer Temperatur als Zustandsgröße des Gases in dem Behälter zugeordnet ist. Dabei sind die Behälter über eine gemeinsame Leitung mit dem Antriebsaggregat verbunden, wobei entlang der gemeinsamen Leitung mindestens ein für alle Behälter gemeinsamer Gassensor zum Ermitteln zumindest einer Zustandsgröße des Gases angeordnet ist. Die Anordnung umfasst als mindestens eine Komponente ein Steuergerät zum Beaufschlagen der Ventile, wobei das Steuergerät dazu ausgebildet ist, zum Versorgen des Antriebsaggregats jeweils nur eines der Ventile zu öffnen und alle anderen Ventile geschlossen zu halten. Das Steuergerät ist zudem dazu ausgebildet, das jeweils geöffnete Ventil wieder zu schließen, wenn zumindest eine ermittelte Zustandsgröße, d. h. die Temperatur des Gases in dem geöffneten Behälter oder die zumindest eine Zustandsgröße in der gemeinsamen Leitung, von einem Sollwert um einen Toleranzwert abweicht.

In einer Ausgestaltung der Erfindung ist vorgesehen, dass ein Gasversorgungssystem für ein Antriebsaggregat mehrere üblicherweise als Zylinder ausgebildete Behälter zum Speichern des Gases umfasst, wobei jedem dieser Behälter ein Ventil zugeordnet ist, über das aus dem Behälter dem Antriebsaggregat Gas zugeführt wird, falls dieses Ventil geöffnet ist.

Bei dem Verfahren zum Versorgen des Antriebsaggregats mit dem Gas wird nunmehr immer nur ein Ventil eines Zylinders bestromt und somit geöffnet, wohingegen die Ventile anderer Zylinder verschlossen bleiben. Dabei können die Ventile einer Reihenfolge entsprechend ringsum aktiviert werden. Somit wird immer nur ein Behälter als Versorgungseinheit für das Antriebsaggregat aktiviert, wobei die Ventile der anderen Zylinder nicht bestromt werden.

Dieser Behälter bleibt solange als Versorgungseinheit aktiv, bis eine vordefinierte Hemmschwelle, die bspw. über eine durchgesetzte Menge an Gas oder einen vordefinierten Abfall an Druck des Gases definiert sein kann, erreicht ist. Diese Hemmschwelle für eine Zustandsgröße des Gases kann entweder fix vorgegeben sein oder situativ verändert werden, wobei letzteres bspw. bei einem Druckabfall vorgesehen sein kann. Die Hemmschwelle kann über eine Abweichung der Zustandsgröße des Gases um einen Toleranzwert von einem Sollwert definiert sein.

Durch Umsetzung des Verfahrens kann Strom zur Aktivierung der anderen Zylinder eingespart werden. Weiterhin ist eine genauere Verbrauchsanalyse des Gases möglich, was auch bei einer Onboard-Diagnose (OBD) genutzt werden kann.

Die Erfindung kann bspw. für Kraftfahrzeuge mit Brennstoffzellen, denen als Gas Wasserstoffgas bereitgestellt wird, aber auch für erdgasbetriebene Kraftfahrzeuge angewendet werden.

Bei einem Dauerbetrieb einer Anordnung zum Versorgen des Antriebsaggregats ist in weiten Betriebsbereichen der Behälter eine Ausströmgeschwindigkeit des Gases aus einem Behälter so groß, dass das Öffnen lediglich eines Behälters vollständig ausreicht, um das Antriebsaggregat mit Gas zu versorgen und zu betreiben.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand einer Ausführungsform in der Zeichnung schematisch dargestellt und wird unter Bezugnahme auf die Zeichnung schematisch und ausführlich beschrieben.

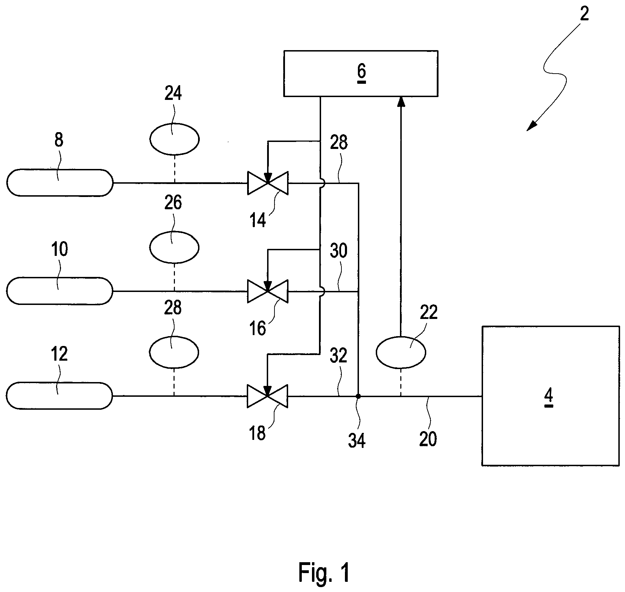

Figur 1 zeigt in schematischer Darstellung eine Ausführungsform einer erfindungsgemäßen Anordnung zum Versorgen eines Antriebsaggregats eines Kraftfahrzeugs.

Die in Figur 1 schematisch dargestellte Anordnung 2 zum Versorgen eines hier als Brennstoffzelle ausgebildeten Antriebsaggregats 4 umfasst ein Steuergerät 6.

Zum Versorgen des Antriebsaggregats 4 sind mehrere hier als Zylinder ausgebildete Behälter 8, 10, 12 vorgesehen, wobei jedem Behälter 8, 10, 12 ein hier behälterindividuelles Ventil 14, 16, 18 zugeordnet ist, das von dem Steuergerät 6 durch Bestromung zu öffnen ist. Jeder Behälter 8, 10, 12 ist über das ihm zugeordnete Ventil 14, 16, 18 mit einer behälterindividuellen Leitung 28, 30, 32 verbunden. Sämtliche behälterindividuellen Leitungen 28, 30, 32 münden an einer gemeinsamen Schnittstelle 34 in eine für alle Behälter 8, 10, 12 gemeinsame Leitung 20.

Gas, das in einem jeweiligen Behälter 8, 10, 12 gespeichert ist, strömt durch das jeweils geöffnete Ventil 14, 16, 18, die zugeordnete behälterindividuelle Leitung 28, 30, 32 sowie die gemeinsame Schnittstelle 34 in die für alle Behälter 8, 10, 12 gemeinsame Leitung 20 und wird über diese gemeinsame Leitung 20 dem Antriebsaggregat 4 zugeführt.

An dieser gemeinsamen Leitung 20, die der für alle Behälter 8, 10, 12 gemeinsamen Schnittstelle 34 nachgeschaltet ist, ist hier ein gemeinsamer Gassensor 22 zum Bestimmen einer Zustandsgröße des Gases angeordnet. In Ausgestaltung ist es möglich, mehrere für alle Behälter 8, 10, 12 gemeinsame Gassensoren 22 entlang der gemeinsamen Leitung 20 anzuordnen, mit denen in der gemeinsamen Leitung 20 gleichzeitig mehrere Zustandsgrößen des Gases überwacht werden können.

Durch diesen mindestens einen gemeinsamen Gassensor 22 kann eine Zustandsgrö-βe des Gases, bevor dieses das Antriebsaggregat 4 erreicht, ermittelt werden.

Figur 1 zeigt weiterhin behälterindividuelle Gassensoren 24, 26, 28, wobei jeder dieser behälterindividuellen Gassensoren 24, 26, 28 einem Behälter 8, 10, 12 individuell zugeordnet und über das zugeordnete behälterindividuelle Ventil 14, 16, 18 von der gemeinsamen Leitung 20 getrennt ist. Über diese behälterindividuellen Gassensoren 24, 26, 28 kann eine Zustandsgröße des Gases in einem jeweils zugeordneten Behälter 8, 10, 12 erfasst werden. Dabei sind diese behälterindividuellen Gassensoren 24, 26, 28 als Temperatursensoren ausgebildet, wobei mit jedem Temperatursensor die Temperatur des Gases in einem jeweiligen Behälter 8, 10, 12 gemessen wird, dem dieser Temperatursensor bzw. Gassensor 24, 26, 28 zugeordnet ist.

Demnach ist das Gas in mehreren Behältern 8, 10, 12 gespeichert, wobei jedem Behälter 8, 10, 12 ein Ventil 14, 16, 18 zum Öffnen und Schließen des Behälters 8, 10, 12 zugeordnet ist. Die Behälter 8, 10, 12 sind über die gemeinsame Leitung 20 mit dem Antriebsaggregat 4 verbunden. Entlang der gemeinsamen Leitung 20 ist mindestens ein für alle Behälter 8, 10, 12 gemeinsamer Gassensor 22 zum Ermitteln zumindest einer Zustandsgröße des Gases angeordnet. Bei dem Verfahren zum Versorgen des Antriebsaggregats 4 wird jeweils nur eines der Ventile 14, 16, 18 geöffnet, wohingegen alle anderen verbleibenden Ventile 14, 16, 18 geschlossen sind bzw. werden. Demnach ist bei Ausführung der Erfindung immer nur eines der Ventile 14, 16, 18 geöffnet. Das jeweils aktuell geöffnete Ventil 14, 16, 18 wird geschlossen, wenn die zumindest eine von dem mindestens einen gemeinsamen Gassensor 22 und/oder von dem behälterindividuellen Gassensor 24, 26, 28, der dem geöffneten Behälter 8, 10, 12 bzw. Ventil 14, 16, 18 zugeordnet ist, ermittelte Zustandsgröße in der gemeinsamen Leitung 20 von einem Sollwert um einen Toleranzwert abweicht. Sobald ein Ventil 14, 16, 18 unter dieser Voraussetzung geschlossen ist, wird nach Bedarf eines der anderen Ventile 14, 16, 18 geöffnet.

In der Regel wird das geöffnete Ventil 14, 16, 18 geschlossen, wenn eine der ermittelten Zustandsgrößen von einem Sollwert um einen Toleranzwert abweicht. In Ausgestaltung wird das geöffnete Ventil 14, 16, 18 geschlossen, wenn die zumindest eine von dem mindestens einen gemeinsamen Gassensor 22 ermittelte Zustandsgröße von einem Sollwert um einen Toleranzwert abweicht. Alternativ oder ergänzend wird das geöffnete Ventil 14, 16, 18 geschlossen, wenn die von dem als Temperatursensor ausgebildeten und dem geöffneten Behälter 8, 10, 12 zugeordneten Gassensor 24, 26, 28 ermittelte Temperatur des Gases in dem Behälter 8, 10, 12 als weitere Zustandsgröße von einem Sollwert um einen Toleranzwert abweicht.

So ist es möglich, zusätzlich eine Änderung bzw. Abnahme, bspw. einer von einem Temperatursensor als Gassensor 24, 26, 28 gemessenen Temperatur eines aktiven und somit geöffneten Behälters 8, 10, 12 zeitabhängig zu bestimmen. Hierbei kann die Änderung der Temperatur mit dem Joule-Thomson-Effekt beschrieben werden. Hierbei wird aus einem geöffneten Behälter 8, 10, 12 eine größere Menge an Wasserstoff entnommen, als dies bei mehreren gleichzeitig geöffneten Behältern 8, 10, 12 zur gleichen Zeit der Fall ist, da der Joule-Thomson Effekt durchsatzabhängig ist. Außerdem kann ein Temperaturverlauf der nicht aktiven, d. h. der geschlossenen Behälter 8, 10, 12 mit eingebunden werden, wobei ein Verlauf der Temperatur der nicht aktiven Behälter 8, 10, 12 einem Langzeittrend der Temperatur der Luft in der Umgebung folgen sollte.

Das Verfahren kann bei einem Dauerbetrieb bzw. bei laufendem Betrieb des Antriebaggregats 4 durchgeführt werden.

Für die Behälter 8, 10, 12 kann eine Reihenfolge definiert werden, wobei die den Behältern 8, 10, 12 zugeordneten Ventile 14, 16, 18 der Reihenfolge entsprechend nacheinander nach Bedarf geöffnet werden.

Über die Kombination aus Sollwert und Toleranzwert kann eine Hemmschwelle für die zumindest eine Zustandsgröße definiert werden. Dabei kann der Sollwert situativ angepasst oder fest vorgegeben werden. Der Toleranzwert kann alternativ oder ergänzend ebenfalls situativ angepasst oder fest vorgegeben werden.

Falls das aktuell geöffnete Ventil 14, 16, 18 zu schließen ist, wenn die mindestens eine überwachte Zustandsgröße ausgehend von einem geringen Wert der Zustandsgröße ansteigt und die Hemmschwelle für diese Zustandsgröße erreicht oder überschreitet, kann die Hemmschwelle als Sollwert abzüglich eines Toleranzwerts definiert oder situativ angepasst werden. Falls das geöffnete Ventil 14, 16, 18 zu schließen ist, wenn die mindestens eine überwachte Zustandsgröße ausgehend von einem höheren Wert der Zustandsgröße sinkt und die Hemmschwelle für die Zustandsgröße erreicht oder unterschreitet, kann die Hemmschwelle als Sollwert zuzüglich eines Toleranzwerts definiert oder situativ angepasst werden. Es ist auch möglich, das Ventil 14, 16, 18 zu schließen, wenn ein aktueller Wert der zumindest einen Zustandsgröße um einen Toleranzwert von einem Sollwert abweicht. In diesem Fall sind eine obere und eine untere Hemmschwelle vorgesehen, die definiert oder situativ angepasst werden können. Eine situative Anpassung des Toleranzwerts und/oder Sollwerts für die zumindest eine Zustandsgröße wird in der Regel abhängig von einem aktuellen Betriebszustand des Antriebsaggregats und/oder mindestens eines der Behälter 8, 10, 12 durchgeführt.

Der mindestens eine gemeinsame Gassensor 22 kann als die zumindest eine Zustandsgröße einen Druck des Gases in der gemeinsamen Leitung 20 messen. Es ist auch möglich, mit dem mindestens einen gemeinsamen Gassensor 22 als zumindest eine Zustandsgröße eine Menge oder Temperatur des in der gemeinsamen Leitung 22 strömenden Gases zu messen.

Das Verfahren kann für ein als Brennstoffzelle ausgebildetes Antriebsaggregat 4 durchgeführt werden, wobei die Brennstoffzelle mit Wasserstoff bzw. Wasserstoffgas versorgt wird. Alternativ kann das Verfahren für ein als Verbrennungsmotor ausgebildetes Antriebsaggregat 4 durchgeführt werden, wobei der Verbrennungsmotor mit Erdgas versorgt wird.

Das Steuergerät 6 ist dazu ausgebildet, mindestens einen Schritt des Verfahrens zu kontrollieren und somit zu steuern und/oder zu regeln. Dies bedeutet, dass das Steuergerät 6 die von dem mindestens einen Gassensor 22 ermittelte, zumindest eine Zustandsgröße überwacht, um dem jeweils zu öffnenden Ventil 14, 16, 18 einen Strom bereitzustellen. In Abhängigkeit eines jeweiligen Werts der zumindest einen Zustandsgröße schließt das Steuergerät 6 ein geöffnetes Ventil 14, 16, 18 und öffnet, bspw. der Reihenfolge entsprechend, das nächste Ventil 14, 16, 18. Der mindestens eine Gassensor 22 kann ggf. als Komponente der Anordnung 2 vorgesehen und als Drucksensor und/oder Gasmengensensor ausgebildet sein.

## Patentansprüche

1. Verfahren zum Versorgen eines Antriebsaggregats (4) eines Kraftfahrzeugs mit einem Gas, das in mehreren Behältern (8, 10, 12) gespeichert ist, wobei jedem Behälter (8, 10, 12) ein Ventil (14, 16, 18) zum Öffnen und Schließen des Behälters (8, 10, 12) und ein als Temperatursensor ausgebildeter Gassensor (24, 26, 28) zum Ermitteln einer Temperatur als Zustandsgröße des Gases in dem Behälter (8, 10, 12) zugeordnet ist, wobei die Behälter (8, 10, 12) über eine gemeinsame Leitung (20) mit dem Antriebsaggregat (4) verbunden sind, und wobei entlang der gemeinsamen Leitung (20) mindestens ein für alle Behälter (8, 10, 12) gemeinsamer Gassensor (22) zum Ermitteln zumindest einer Zustandsgröße des Gases angeordnet ist, wobei zum Versorgen des Antriebsaggregats (4) jeweils nur eines der Ventile (14, 16, 18) geöffnet wird und alle anderen Ventile (14, 16, 18) geschlossen werden, wobei das geöffnete Ventil (14, 16, 18) geschlossen wird, wenn zumindest eine ermittelte Zustandsgröße von einem Sollwert um einen Toleranzwert abweicht,
**dadurch gekennzeichnet,**
**dass** zum Versorgen des Antriebsaggregats (4) jeweils nur eines der Ventile (14, 16, 18) bestromt und damit geöffnet wird und alle anderen Ventile (14, 16, 18) nicht bestromt werden und geschlossen bleiben, wobei eine Änderung der von dem Temperatursensor des geöffneten Behälters (8, 10, 12) gemessenen Temperatur zeitabhängig bestimmt wird, wobei über den Joule-Thomson-Effekt ein Durchsatz an Wasserstoffgas für den mindestens einen Behälter bestimmt wird, und wobei die Änderung der Temperatur von dem durchsatzabhängigen Joule-Thomson-Effekt abhängig ist.

2. Verfahren nach Anspruch 1 bei dem das geöffnete Ventil (14, 16, 18) geschlossen wird, wenn die zumindest eine von dem als Temperatursensor ausgebildeten und dem geöffneten Behälter (8, 10, 12) zugeordneten Gassensor (24, 26, 28) ermittelte Temperatur von einem Sollwert um einen Toleranzwert abweicht.

3. Verfahren nach einem der voranstehenden Ansprüche, das bei einem Dauerbetrieb des Antriebsaggregats (4) durchgeführt wird.

4. Verfahren nach einem der voranstehenden Ansprüche, bei dem für die Behälter (8, 10, 12) eine Reihenfolge definiert wird, wobei die den Behältern (8, 10, 12) zugeordneten Ventile (14, 16, 18) der Reihenfolge entsprechend bei Bedarf nacheinander geöffnet werden.

5. Verfahren nach einem der voranstehenden Ansprüche, bei dem der Sollwert einer Zustandsgröße situativ angepasst wird.

6. Verfahren nach einem der Ansprüche 1 bis 4, bei dem der Sollwert einer Zustandsgröße fest vorgegeben wird.

7. Verfahren nach einem der voranstehenden Ansprüche, bei dem der Toleranzwert einer Zustandsgröße situativ angepasst wird.

8. Verfahren nach einem der Ansprüche 1 bis 6, bei dem der Toleranzwert einer Zustandsgröße fest vorgegeben wird.

9. Verfahren nach einem der voranstehenden Ansprüche, bei dem mit dem mindestens einen gemeinsamen Gassensor (22) als die zumindest eine Zustandsgröße ein Druck des Gases gemessen wird.

10. Verfahren nach einem der voranstehenden Ansprüche, bei dem mit dem mindestens einen gemeinsamen Gassensor (22) als die zumindest eine Zustandsgröße eine Menge des Gases gemessen wird.

11. Verfahren nach einem der voranstehenden Ansprüche, das für ein als Brennstoffzelle ausgebildetes Antriebsaggregat (4) durchgeführt wird, wobei die Brennstoffzelle mit Wasserstoff versorgt wird.

12. Verfahren nach einem der Ansprüche 1 bis 10, das für ein als Verbrennungsmotor ausgebildetes Antriebsaggregat (4) durchgeführt wird, wobei der Verbrennungsmotor mit Erdgas versorgt wird.

13. Anordnung zum Versorgen eines Antriebsaggregats (4) eines Kraftfahrzeugs mit einem Gas, das in mehreren Behältern (8, 10, 12) gespeichert ist, wobei jedem Behälter (8, 10, 12) ein Ventil (14, 16, 18) zum Öffnen und Schließen des Behälters (8, 10, 12) und ein als Temperatursensor ausgebildeter Gassensor (24, 26, 28) zum Ermitteln einer Temperatur als Zustandsgröße des Gases in dem Behälter (8, 10, 12) zugeordnet ist, wobei die Behälter (8, 10, 12) über eine gemeinsame Leitung (20) mit dem Antriebsaggregat (4) verbunden sind, und wobei entlang der gemeinsamen Leitung (20) mindestens ein für alle Behälter (8, 10, 12) gemeinsamer Gassensor (22) zum Ermitteln zumindest einer Zustandsgröße des Gases angeordnet ist, wobei die Anordnung (2) ein Steuergerät (6) zum Beaufschlagen der Ventile (14, 16, 18) umfasst, wobei das Steuergerät (6) dazu ausgebildet ist, zum Versorgen des Antriebsaggregats (4) jeweils nur eines der Ventile (14, 16, 18) zu öffnen und alle anderen Ventile (14, 16, 18) geschlossen zu halten, wobei das Steuergerät (6) das geöffnete Ventil (14, 16, 18) schließt, wenn die zumindest eine ermittelte Zustandsgröße von einem Sollwert um einen Toleranzwert abweicht,
**dadurch gekennzeichnet,**
**dass** zum Versorgen des Antriebsaggregats (4) jeweils nur eines der Ventile (14, 16, 18) zu bestromen und damit zu öffnen ist und alle anderen Ventile (14, 16, 18) nicht zu bestromen und geschlossen zu halten sind, wobei eine Änderung der von dem Temperatursensor des geöffneten Behälters (8, 10, 12) gemessenen Temperatur zeitabhängig zu bestimmen ist, und wobei die Änderung der Temperatur mit dem Joule-Thomson Effekt zu beschreiben ist, wobei über den Joule-Thomson-Effekt ein Durchsatz an Wasserstoffgas für den mindestens einen Behälter zu bestimmen ist, und wobei die Änderung der Temperatur von dem durchsatzabhängigen Joule-Thomson-Effekt abhängig ist.

14. Anordnung nach Anspruch 13, bei der das Steuergerät (6) dazu ausgebildet ist, dem zu öffnenden Ventil (14, 16, 18) einen Strom bereitzustellen.

## Claims

1. Method for supplying a drive unit (4) of a motor vehicle with a gas, which is stored in a plurality of containers (8, 10, 12), wherein each container (8, 10, 12) is assigned a valve (14, 16, 18) for opening and closing the container (8, 10, 12) and a gas sensor (24, 26, 28), configured as a temperature sensor, for determining a temperature as a state variable of the gas in the container (8, 10, 12), wherein the containers (8, 10, 12) are connected to the drive unit (4) by means of a common line (20), and wherein at least one common gas sensor (22) for all the containers (8, 10, 12) for determining at least one state variable of the gas is arranged along the common line (20), wherein in order to supply the drive unit (4) only one of the valves (14, 16, 18) is respectively opened and all the other valves (14, 16, 18) are closed, wherein the opened valve (14, 16, 18) is closed when at least one state variable which has been determined deviates from a setpoint value by a tolerance value,
**characterised in that**
in order to supply the drive unit (4) only one of the valves (14, 16, 18) is respectively supplied with electricity and therefore opened, and all the other valves (14, 16, 18) are not supplied with electricity and therefore remain closed, wherein a change in the temperature measured by the temperature sensor of the opened container (8, 10, 12) is determined as a function of time, wherein a throughput of hydrogen gas for the at least one container is determined by means of the Joule-Thomson effect, and wherein the change in the temperature is dependent on the throughput-dependent Joule-Thomson effect.

2. Method according to claim 1, wherein the opened valve (14, 16, 18) is closed when the at least one temperature determined by the gas sensor (24, 26, 28) configured as a temperature sensor and assigned to the opened container (8, 10, 12) deviates from a setpoint value by a tolerance value.

3. Method according to any one of the preceding claims, which is carried out during continuous operation of the drive unit (4).

4. Method according to any one of the preceding claims, wherein a sequence is defined for the containers (8, 10, 12), the valves (14, 16, 18) assigned to the containers (8, 10, 12) being opened successively according to the sequence when required.

5. Method according to any one of the preceding claims, wherein the setpoint value of a state variable is adapted situation-dependently.

6. Method according to any one of claims 1 to 4, wherein the setpoint value of a state variable is rigidly predetermined.

7. Method according to any one of the preceding claims, wherein the tolerance value of a state variable is adapted situation-dependently.

8. Method according to any one of claims 1 to 6, wherein the tolerance value of a state variable is rigidly predetermined.

9. Method according to any one of the preceding claims, wherein a pressure of the gas is measured as the at least one state variable by the at least one common gas sensor (22).

10. Method according to any one of the preceding claims, wherein a quantity of the gas is measured as the at least one state variable by the at least one common gas sensor (22).

11. Method according to any one of the preceding claims, which is carried out for a drive unit (4) configured as a fuel cell, wherein the fuel cell is supplied with hydrogen.

12. Method according to any one of claims 1 to 10, which is carried out for a drive unit (4) configured as an internal combustion engine, wherein the internal combustion engine is supplied with natural gas.

13. Arrangement for supplying a drive unit (4) of a motor vehicle with a gas, which is stored in a plurality of containers (8, 10, 12), wherein each container (8, 10, 12) is assigned a valve (14, 16, 18) for opening and closing the container (8, 10, 12) and a gas sensor (24, 26, 28), configured as a temperature sensor, for determining a temperature as a state variable of the gas in the container (8, 10, 12), wherein the containers (8, 10, 12) are connected to the drive unit (4) by means of a common line (20), and wherein at least common one gas sensor (22) for all the containers (8, 10, 12) for determining at least one state variable of the gas is arranged along the common line (20), wherein the arrangement (2) comprises a control device (6) for actuating the valves (14, 16, 18), wherein the control device (6) is configured, in order to supply the drive unit (4), respectively to open only one of the valves (14, 16, 18) and to keep all the other valves (14, 16, 18) closed, wherein the control device (6) closes the opened valve (14, 16, 18) when at least one state variable which has been determined deviates from a setpoint value by a tolerance value,
**characterised in that**
in order to supply the drive unit (4) only one of the valves (14, 16, 18) is respectively to be supplied with electricity and therefore opened, and all the other valves (14, 16, 18) are not to be supplied with electricity and our therefore to be kept closed, wherein a change in the temperature measured by the temperature sensor of the opened container (8, 10, 12) is to be determined as a function of time, and wherein the change in the temperature is to be described by the Joule-Thomson effect, wherein a throughput of hydrogen gas for the at least one container is to be determined by means of the Joule-Thomson effect, and wherein the change in the temperature is dependent on the throughput-dependent Joule-Thomson effect.

14. Arrangement according to claim 13, wherein the control device (6) is configured to provide a current to the valve (14, 16, 18) to be opened.

## Revendications

1. Procédé pour alimenter un groupe moteur (4) d'un véhicule automobile avec un gaz qui est stocké dans plusieurs récipients (8, 10, 12), dans lequel une soupape (14, 16, 18) pour ouvrir et fermer le récipient (8, 10, 12) et un capteur de gaz (24, 26, 28) conçu comme un capteur de température pour déterminer une température en tant que grandeur d'état du gaz dans le récipient (8, 10, 12) sont associés à chaque récipient (8, 10, 12), dans lequel les récipients (8, 10, 12) sont reliés au groupe moteur (4) par l'intermédiaire d'une conduite commune (20) et dans lequel au moins un capteur de gaz (22) commun à tous les récipients (8, 10, 12) pour déterminer au moins une grandeur d'état du gaz est agencé le long de la conduite commune (20), à chaque fois une seule des soupapes (14, 16, 18) étant ouverte pour alimenter le groupe moteur (4) et toutes les autres soupapes (14, 16, 18) étant fermées, la soupape (14, 16, 18) ouverte étant fermée lorsque l'écart entre au moins une grandeur d'état déterminée et une valeur de consigne dépasse une valeur de tolérance,
**caractérisé en ce que**, pour alimenter le groupe moteur (4), à chaque fois une seule des soupapes (14, 16, 18) est alimentée en courant et donc ouverte et toutes les autres soupapes (14, 16, 18) ne sont pas alimentées en courant et restent fermées, une variation de la température mesurée par le capteur de température du récipient (8, 10, 12) ouvert étant déterminée en fonction du temps, un débit de gaz hydrogène pour l'au moins un récipient étant déterminé par l'intermédiaire de l'effet Joule-Thomson et la variation de la température étant dépendante de l'effet Joule-Thomson dépendant du débit.

2. Procédé selon la revendication 1, dans lequel on ferme la soupape (14, 16, 18) ouverte lorsque l'écart entre l'au moins une température déterminée par le capteur de gaz (24, 26, 28) conçu comme capteur de température et associé au récipient (8, 10, 12) ouvert et une valeur de consigne dépasse une valeur de tolérance.

3. Procédé selon l'une des revendications précédentes, qui est exécuté lors d'un fonctionnement en continu du groupe moteur (4).

4. Procédé selon l'une des revendications précédentes, dans lequel on définit un ordre chronologique pour les récipients (8, 10, 12), les soupapes (14, 16, 18) associées aux récipients (8, 10, 12) étant ouvertes les unes après les autres selon les besoins dans l'ordre défini.

5. Procédé selon l'une des revendications précédentes, dans lequel on adapte la valeur de consigne d'une grandeur d'état à la situation.

6. Procédé selon l'une des revendications 1 à 4, dans lequel on prescrit de manière permanente la valeur de consigne d'une grandeur d'état.

7. Procédé selon l'une des revendications précédentes, dans lequel on adapte la valeur de tolérance d'une grandeur d'état à la situation.

8. Procédé selon l'une des revendications 1 à 6, dans lequel on prescrit de manière permanente la valeur de tolérance d'une grandeur d'état.

9. Procédé selon l'une des revendications précédentes, dans lequel on mesure une pression du gaz en tant que l'au moins une grandeur d'état avec l'au moins un capteur de gaz (22) commun.

10. Procédé selon l'une des revendications précédentes, dans lequel on mesure une quantité du gaz en tant que l'au moins une grandeur d'état avec l'au moins un capteur de gaz (22) commun.

11. Procédé selon l'une des revendications précédentes, qui est exécuté pour un groupe moteur (4) conçu sous forme de pile à combustible, la pile à combustible étant alimentée en hydrogène.

12. Procédé selon l'une des revendications 1 à 10, qui est exécuté pour un groupe moteur (4) conçu sous forme de moteur à combustion interne, le moteur à combustion interne étant alimenté en gaz naturel.

13. Dispositif pour alimenter un groupe moteur (4) d'un véhicule automobile avec un gaz qui est stocké dans plusieurs récipients (8, 10, 12), dans lequel une soupape (14, 16, 18) pour ouvrir et fermer le récipient (8, 10, 12) et un capteur de gaz (24, 26, 28) conçu comme un capteur de température pour déterminer une température en tant que grandeur d'état du gaz dans le récipient (8, 10, 12) sont associés à chaque récipient (8, 10, 12), dans lequel les récipients (8, 10, 12) sont reliés au groupe moteur (4) par l'intermédiaire d'une conduite commune (20) et dans lequel au moins un capteur de gaz (22) commun à tous les récipients (8, 10, 12) pour déterminer au moins une grandeur d'état du gaz est agencé le long de la conduite commune (20), le dispositif (2) comprenant un appareil de commande (6) pour alimenter les soupapes (14, 16, 18), l'appareil de commande (6) étant conçu pour, en vue d'alimenter le groupe moteur (4), ouvrir à chaque fois une seule des soupapes (14, 16, 18) et maintenir fermées toutes les autres soupapes (14, 16, 18), l'appareil de commande (6) fermant la soupape (14, 16, 18) ouverte lorsque l'écart entre au moins une grandeur d'état déterminée et une valeur de consigne dépasse une valeur de tolérance,
**caractérisé en ce que**, pour alimenter le groupe moteur (4), à chaque fois une seule des soupapes (14, 16, 18) doit être alimentée en courant et donc ouverte et toutes les autres soupapes (14, 16, 18) ne doivent pas être alimentées en courant et doivent être maintenues fermées, une variation de la température mesurée par le capteur de température du récipient (8, 10, 12) ouvert devant être déterminée en fonction du temps, la variation de la température devant être décrite avec l'effet Joule-Thomson, un débit de gaz hydrogène pour l'au moins un récipient devant être déterminé par l'intermédiaire de l'effet Joule-Thomson et la variation de la température étant dépendante de l'effet Joule-Thomson dépendant du débit.

14. Dispositif selon la revendication 13, dans lequel l'appareil de commande (6) est conçu pour fournir un courant à la soupape (14, 16, 18) à ouvrir.
